# EUROPEAN PATENT SPECIFICATION

(11) **EP 4 009 417 B1**
(45) Date of publication and mention of the grant of the patent: **29.04.2026**
(21) Application number: 21808129.7
(22) Date of filing: 16.02.2021
(51) Int. Cl.: H01M 10/48, H01M 50/105, H01M 50/30, H01M 50/124, G01L 5/00, G01L 1/16

(54) **POUCH-SHAPED SECONDARY BATTERY INCLUDING PRESSURE SENSING DEVICE CONFIGURED TO MEASURE INTERNAL PRESSURE**
BEUTELFÖRMIGE SEKUNDÄRBATTERIE MIT DRUCKMESSVORRICHTUNG ZUR MESSUNG DES INNENDRUCKS
BATTERIE SECONDAIRE EN FORME DE POCHE COMPRENANT UN DISPOSITIF DE DÉTECTION DE PRESSION POUR MESURER UNE PRESSION INTERNE

(30) Priority: 20.05.2020 KR 20200060603
(43) Date of publication of application: 08.06.2022
(73) Proprietor: LG ENERGY SOLUTION, LTD., Seoul 07335 (KR)
(72) Inventor: KO, Dong Wan, Daejeon 34122 (KR)
(74) Representative: Plasseraud IP
(86) International application number: PCT/KR2021/001972
(87) International publication number: WO 2021/235652

(56) References cited:
- EP-A1- 3 972 035
- EP-A1- 4 181 271
- JP-A- 2000 251 949
- JP-A- 2002 313 431
- JP-A- 2012 069 404
- JP-A- 2015 158 442
- KR-A- 20120 029 320
- KR-A- 20140 101 429
- KR-A- 20170 093 594
- KR-A- 20190 078 398
- US-A1- 2014 312 911
- US-A1- 2015 024 291

## Description

### [Technical Field]

This application claims the benefit of priority to Korean Patent Application No. 2020-0060603 filed on May 20, 2020.

The present invention relates to a pouch-shaped secondary battery including a pressure sensing device configured to measure internal pressure, and more particularly to a pouch-shaped secondary battery configured such that a pressure sensing device configured to measure pressure in a non-contact manner extends through a case from the inside to the outside of the case in order to directly measure pressure in the case.

### [Background Art]

With recent diversification of devices that use batteries, demand for high-capacity and high-density batteries has increased. Thereamong, a lithium secondary battery, which has high energy density and discharge voltage, has been commercialized and used in various forms.

Based on the external shape thereof, the lithium secondary battery is classified as a cylindrical secondary battery, a prismatic secondary battery, or a pouch-shaped secondary battery. Thereamong, the pouch-shaped secondary battery generally includes a case made of an aluminum laminate sheet and an electrode assembly received in the case. Since the case is made of the aluminum laminate sheet in the pouch-shaped secondary battery, the thickness of the aluminum laminate sheet may be adjusted in order to obtain a high-capacity and high-density secondary battery. In addition, there is an advantage in that the secondary battery can be manufactured in various shapes so as to be suitable for places that need the battery.

Since the case is hermetically sealed in the state in which the electrode assembly is received in a receiving portion formed by shaping the aluminum laminate sheet in the pouch-shaped secondary battery, however, there is a disadvantage in that it is not possible to discharge gas generated in the case.

To this end, the pouch-shaped secondary battery is generally configured such that a margin space capable of allowing the case to swell is provided in the case or such that a gas pocket capable of receiving gas is provided in a space other than the receiving portion. Since the amount of gas that can be received in the margin space or the gas pocket is limited, however, it is difficult to know when the function of the pouch-shaped secondary battery will stop in the case in which the pouch-shaped secondary battery is actually used. To this end, much research to measure the pressure of the pouch-shaped secondary battery in order to check the lifespan of the pouch-shaped secondary battery and to improve safety in use of the pouch-shaped secondary battery has been conducted.

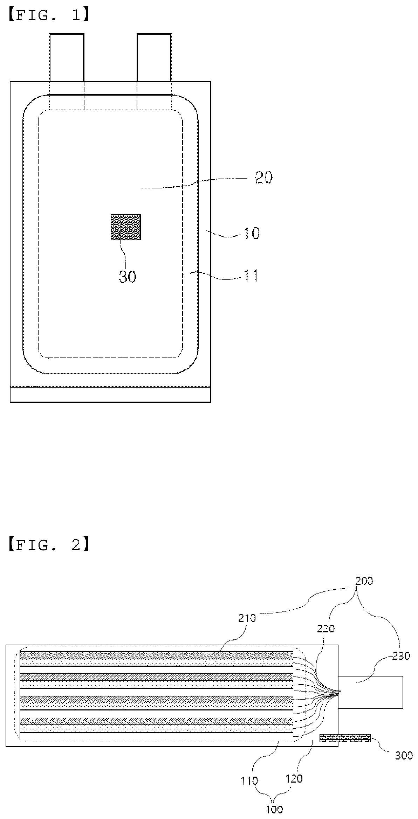

FIG. 1 is a plan view showing the upper part of a pouch-shaped secondary battery including a conventional pressure sensing device.

As shown in FIG. 1, the conventional pouch-shaped secondary battery is configured such that a pressure sensing device 30 is provided at the outside of a case 10 having a receiving portion 11, i.e. the upper part of an electrode assembly 20. The pressure sensing device 30 is located at a central portion of the case 10, which is most greatly deformed, to sense a change in the pressure, i.e. the extent of swelling, of the case. In the case in which the case does not uniformly swell, however, there is a disadvantage in that it is not possible to accurately measure pressure in the case.

In Patent Document 1, a probe configured to sense swelling of a battery cell is installed at the outer surface of the battery cell in order to detect pressure in the battery cell. However, the extent of swelling of the battery cell varies depending on the position of the probe. As a result, pressure in a case due to gas generated in the case is different from a measured value, whereby it may not be possible to predict rupture of the case.

Therefore, a construction capable of accurately measuring pressure in a pouch-shaped secondary battery in order to predict rupture of a case and to improve safety of the pouch-shaped secondary battery is needed. Other prior-art is disclosed in patent documents 2-5.

### (Prior Art Document)

(Patent Document 1) Korean Patent Application Publication No. 10-2017-0040919 (2017.04.14)
(Patent Document 2) JP 2002 313431 A
(Patent Document 3) JP 2000 251949 A
(Patent Document 4) JP 2015 158442 A
(Patent Document 5) JP 2012 069404 A

### [Disclosure]

### [Technical Problem]

The present invention has been made in view of the above problems, and it is an object of the present invention to provide a pouch-shaped secondary battery including a pressure sensing device capable of accurately measuring pressure in the battery.

It is an object of the present invention to accurately measure pressure in a pouch-shaped secondary battery, thereby accurately predicting the lifespan of the pouch-shaped secondary battery and improving safety of the pouch-shaped secondary battery.

### [Technical Solution]

In order to accomplish the above objects, there is provided a pouch-shaped secondary battery according to the independent claim 1, which includes a case having a receiving portion configured to receive, the electrode assembly being provided in the receiving portion, an electrode assembly and a pressure sensing device configured to measure pressure in the pouch-shaped secondary battery, wherein the pressure sensing device extends through the case from the inside to the outside of the case.

The electrode assembly may include a stack constituted by a positive electrode, a separator, and a negative electrode; one or more electrode tabs protruding from the stack, the electrode tabs being configured to electrically connect the stack to the outside; and an electrode lead to which the electrode tabs are electrically connected, the electrode lead protruding out of the case, and the pressure sensing device may be provided at a space formed due to the electrode tabs.

Also, the case additionally has a gas pocket configured to receive gas generated in the receiving portion, and the pressure sensing device is provided at the gas pocket.

The pressure sensing device may include a measurement portion located in the case, the measurement portion being configured to measure pressure; a connection terminal located outside the case, the connection terminal being configured to connect the measurement portion to an external instrument; and a through-opening located between the measurement portion and the connection terminal, the through-opening being hermetically sealed together with the case when the case is hermetically sealed.

Also, at least a portion of the through-opening may include a coupling portion with an insulation film being removed.

Also, the outer surface of the coupling portion may be made of copper.

The coupling portion may be provided at the portion of the pressure sensing device at which no board is located.

The measurement portion may have a fluid, such as gel, therein in order to sense pressure.

A pressure measurement apparatus according to the present invention includes a jig configured to press the upper part and the lower part of the pouch-shaped secondary battery; and a pressure transmission device connected to the pressure sensing device disposed in the pouch-shaped secondary battery so as to protrude outwards therefrom, the pressure transmission device being configured to transmit pressure information to an external device.

The pressure transmission device may transmit the pressure information to the external device through a communication scheme.

A pressure measurement method according to the present invention includes (S1) pressing the upper part and the lower part of the pouch-shaped secondary battery using a jig, (S2) transmitting information sensed by the pressure sensing device mounted at the pressed pouch-shaped secondary battery to a pressure transmission device, and (S3) transmitting, by the pressure transmission device, pressure information to an external device.

The present invention may provide a battery module including the pouch-shaped secondary battery. In addition, the present invention may provide a battery pack including the battery module.

Furthermore, the present invention may provide a device including the battery pack as a power source.

The device may be a mobile electronic device, a wearable electronic device, a power tool driven by a battery-powered motor, an electric automobile, such as an electric vehicle (EV), a hybrid electric vehicle (HEV), or a plug-in hybrid electric vehicle (PHEV), an electric two-wheeled vehicle, such as an electric bicycle (E-bike) or an electric scooter (E-scooter), an electric golf cart, or an energy storage system.

In the present invention, one or more constructions that do not conflict with each other may be selected and combined from among the above constructions.

### [Advantageous Effects]

As is apparent from the above description, a pouch-shaped secondary battery according to the present invention is configured such that it is possible to directly measure pressure in the pouch-shaped secondary battery in order to check the amount of gas in the pouch-shaped secondary battery and to determine whether the battery is abnormal.

In addition, it is possible to accurately check the lifespan of the pouch-shaped secondary battery, whereby it is possible to improve safety of a user who uses the pouch-shaped secondary battery, and it is possible for the user to check the lifespan of the pouch-shaped secondary battery in real time and to determine whether the battery is abnormal.

### [Description of Drawings]

FIG. 1 is a plan view showing the upper part of a pouch-shaped secondary battery including a conventional pressure sensing device.
FIG. 2 is a side sectional view of a pouch-shaped secondary battery including a pressure sensing device provided at a terraced portion.
FIG. 3 is a photograph showing the pouch-shaped secondary battery including the pressure sensing device provided at the terraced portion.
FIG. 4 is an enlarged view of the terraced portion to which the pressure sensing device is mounted.
FIG. 5 is a side sectional view of a pouch-shaped secondary battery including the pressure sensing device according to the present invention provided at a gas pocket.
FIG. 6 is a schematic view of the pressure sensing device according to the present invention.
FIG. 7 is a photograph showing a measurement portion of the pressure sensing device according to the present invention.
FIG. 8 is a photograph of the pressure sensing device according to the present invention with an outer molding of the measurement portion being removed.
FIG. 9 is a photograph showing a pressure measurement apparatus according to the present invention.
FIG. 10 is a schematic view of the pressure measurement apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, embodiments of the present invention will be described in more detail according to the drawings.

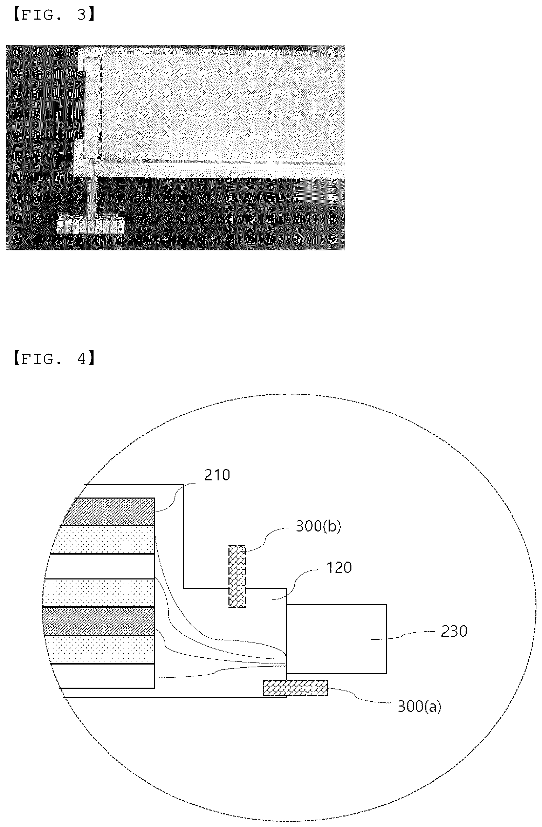

FIG. 2 is a side sectional view of a pouch-shaped secondary battery including a pressure sensing device provided at a terraced portion, FIG. 3 is a photograph showing the pouch-shaped secondary battery including the pressure sensing device provided at the terraced portion, and FIG. 4 is an enlarged view of the terraced portion to which the pressure sensing device is mounted.

The pouch-shaped secondary battery according to the present invention includes a case 100 having a receiving portion 110 configured to receive an electrode assembly 200; and a pressure sensing device 300 configured to measure pressure in a non-contact manner, wherein the pressure sensing device 300 extends through the case 100 from the inside to the outside of the case 100.

When describing the case 100 first, the case 100 is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and resistance to impact strength, and excellent chemical resistance, may be used.

The metal layer, which is disposed so as to abut the inner layer, corresponds to a barrier layer configured to prevent moisture or various kinds of gas from permeating into the battery from the outside. An aluminum film, which is light and easily shapeable, may be used as a material for the metal layer.

The outer layer is provided on the other surface of the metal layer that abuts the inner layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

The case 100 has a receiving portion 110 capable of receiving the electrode assembly 200. The receiving portion 110 is surrounded by a side wall formed by deforming the laminate sheet so as to receive the electrode assembly 200.

The electrode assembly 200 may be a jelly-roll type electrode assembly, which is configured to have a structure in which a long sheet type positive electrode and a long sheet type negative electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other. However, the present invention is not limited thereto. Hereinafter, the electrode assembly 200 according to the present invention will be described as being a stacked type electrode assembly, which, however, is for convenience of description, and any one of the jelly-roll type electrode assembly, the stacked and folded type electrode assembly, and the laminated and stacked type electrode assembly may be used as the electrode assembly 200 according to the present invention as long as the electrode assembly is configured to be received in the pouch-shaped secondary battery.

The electrode assembly 200, a description of which will follow, includes a stack 210 constituted by a positive electrode, a separator, and a negative electrode; electrode tabs 220 connected to the positive electrode or the negative electrode in order to electrically connect the stack 210 to the outside; and an electrode lead 230 to which the electrode tabs 220 are electrically connected. The electrode lead 230 protrudes out of the case 100 to connect the pouch-shaped secondary battery to an external device.

The pressure sensing device 300 has a structure in which one side of the pressure sensing device is located in the case 100 and the other side of the pressure sensing device is located outside the case 100, and extends through the case 100.

Since an electrolytic solution may be present in the receiving portion in some cases, the pressure sensing device 300 may be made of a waterproof material.

The pressure sensing device 300 may be located in a surplus space defined in the pouch-shaped secondary battery in order not to affect performance of the pouch-shaped secondary battery while not reducing density of the pouch-shaped secondary battery.

As an example, not according to the present invention the pressure sensing device 300 may be located at a terraced portion 120 of the case 100. The terraced portion 120 is a surplus space formed as the result of hermetically sealing the case 100, which is a space in which the electrode tabs 220 of the electrode assembly 200 are gathered and connected to the electrode lead 230. Since the electrode tabs 220 are gathered as a single body, a predetermined space is formed. Consequently, the space occupied by the pressure sensing device 300 does not affect density and performance of the pouch-shaped secondary battery.

In addition, since the pressure sensing device 300 is located at the terraced portion 120, it is possible to directly measure a change in pressure in the case 100, whereby more accurate measurement is possible.

The pressure sensing device 300 may protrude from the surface of the terraced portion 120 from which the electrode lead 230 protrudes, as denoted by reference symbol 300(a) in FIG. 4, or may be located at the surface of the terraced portion 120 from which the electrode lead 230 does not protrude, i.e. the portion of the terraced portion at which a projection of the case 100 is located, as denoted by reference symbol 300(b) in FIG. 4.

In the case in which the pressure sensing device 300 is located at the position indicated by 300(a), there is an advantage in that there is little danger of the pressure sensing device 300 being damaged or separated from the case 100 due to interference with the external device. In the case in which the pressure sensing device 300 is located at the position indicated by 300(b), on the other hand, there is an advantage in that it is possible to prevent a decrease in sealing force of the case 100 in which the electrode lead 230 is located.

The position at which the pressure sensing device 300 is mounted may be changed depending on a place at which the pouch-shaped secondary battery is used, the extent of hermetical sealing of the case, and other circumstances.

In order for the pressure sensing device 300 to perform various functions while minimizing the portion of the case 100 through which the pressure sensing device extends, only the minimum portion of the pressure sensing device capable of sensing pressure changed due to gas may be located in the case 100, and a plurality of terminals may be connected to the portion of the pressure sensing device exposed outwards from the case in order to perform various functions. The pressure sensing device 300 will be described below in detail.

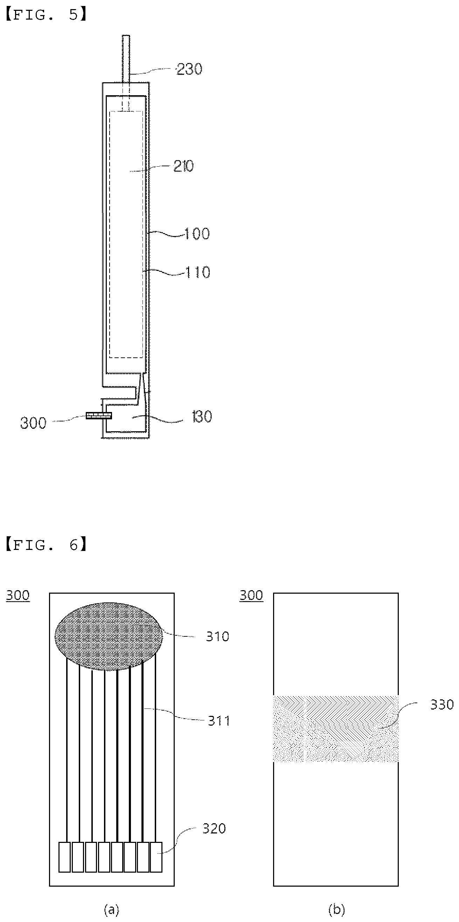

FIG. 5 is a side sectional view of a pouch-shaped secondary battery including the pressure sensing device according to the present invention provided at a gas pocket.

As shown in FIG. 5, the pouch-shaped secondary battery according to the independent claim 1 further includes a gas pocket 130 capable of receiving gas in the receiving portion 110. A one-way valve configured to allow gas to move from the interior of the receiving portion 110 only to the gas pocket 130 may be provided at the gas pocket 130.

The pressure sensing device 300 according to the present invention is provided at the gas pocket 130. For example, the pressure sensing device 300 may be disposed so as to extend through the gas pocket 130 and the case 100. One side of the pressure sensing device 300 may be located in the gas pocket 130, and the other side of the pressure sensing device 300 may be located outside the case 100 defining the gas pocket 130.

Since a portion of the pressure sensing device 300 is located in the gas pocket 130, as described above, there is little danger of the pressure sensing device 300 reacting with an electrolytic solution. In addition, since the pressure sensing device senses pressure in the gas pocket 130, it is possible to determine whether the lifespan of the pouch-shaped secondary battery has expired or whether the pouch-shaped secondary battery is abnormal.

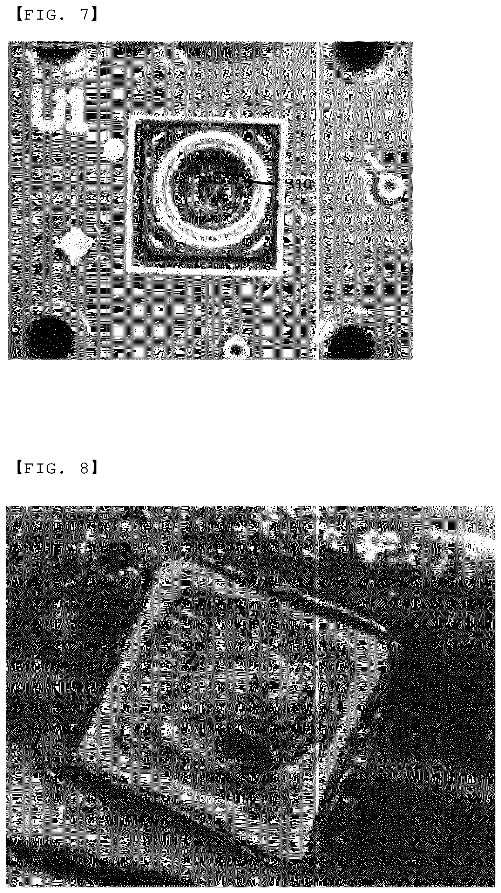

FIG. 6 is a schematic view of the pressure sensing device according to the present invention, and FIG. 7 is a photograph showing a measurement portion of the pressure sensing device according to the present invention. In addition, FIG. 8 is a photograph of the pressure sensing device according to the present invention with an outer molding of the measurement portion being removed.

FIG. 6(a) schematically shows the front surface of the pressure sensing device, and FIG. 6(b) schematically shows the rear surface of the pressure sensing device.

The pressure sensing device 300 according to the present invention may include a measurement portion 310 located in the case 100 so as to measure pressure, a connection terminal 320 located outside the case 100 so as to connect the measurement portion 310 to an external instrument, and a through-opening 330 located between the measurement portion 310 and the connection terminal 320 so as to be hermetically sealed together with the case 100 when the case is hermetically sealed.

The measurement portion 310 may include a pressure sensor including a fluid capable of being deformed by pressure and being restored to the original shape thereof when external force is removed, such as gel. The gel in the measurement portion 310 may be deformed by external force, and such deformation may be converted into an electrical signal.

As an example, collision occurs between molecules of the gel in the measurement portion 310 due to pressure, which is recognized by terminals connected to the gel, whereby it is possible to measure pressure.

In addition, the gel may be deformed by pressure, and such deformation is transmitted to the measurement portion. Consequently, it is possible to measure pressure through deformation of the measurement portion. The gel may be thinly etched to form a diaphragm, and an output signal may be formed by a bridge circuit when pressure is applied to the diaphragm.

A sensor configured to transmit pressure received from the gel to the outside may be located under the gel or in the gel. In this case, the gel may serve to protect the sensor from an external material, such as an electrolytic solution or moisture.

A silicone-based resin material may be used as an example of the gel. In this case, as shown in FIGS. 7 and 8, the measurement portion 310 may have a shape in which the sensor, which is connected to a transmission portion 311 configured to transmit an electrical signal to the connection terminal 320, is covered with the gel and the same is fixed using an outer molding. The gel may be filled so as to cover the sensor in a liquid phase and may be deformed into gel phase through a thermosetting process.

Any one of pressure sensors, such as LPS33HW, MS5840-02BA, and MS5837-30BA, which are sold on the market, may be used as the measurement portion 310.

The measurement portion 310 and the connection terminal 320 may transmit and receive an electrical signal generated in the measurement portion 310 through the transmission portion 311.

The connection terminal 320 may be configured as a port capable of being connected to an external device, or the connection terminal 320 may communicate with the outside. Although the connection terminal 320 may be directly connected to the external device, the connection terminal may indirectly transmit information to the external device through wireless communication. In addition, the connection terminal 320 may be marked differently depending on the generation extent of the gas in order to indicate the risk extent of the pouch-shaped secondary battery.

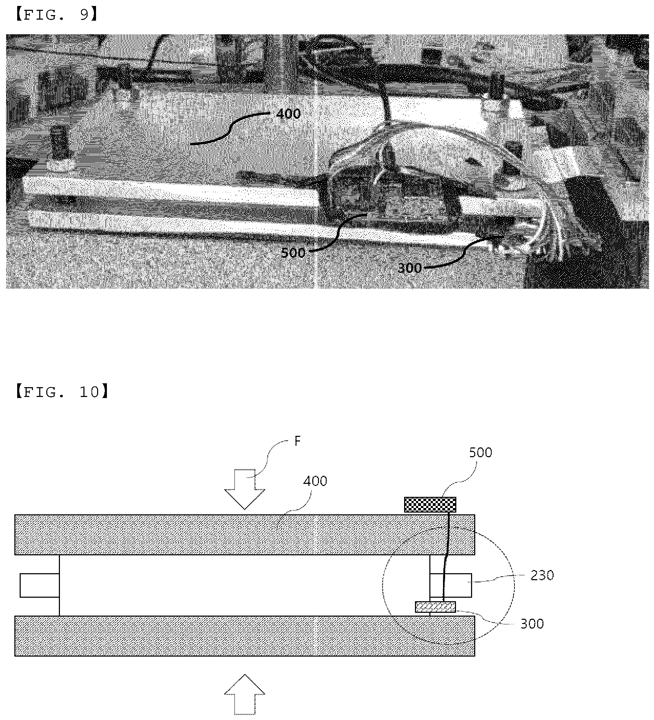

The through-opening 330, which is a portion configured to be hermetically sealed with the case 100, may have a coupling portion, from which at least a portion of an insulation film is removed in order to improve sealing force of the case 100. The outer surface of the coupling portion may be made of a material capable of being easily welded or attached to the case 100, such as copper. The coupling portion may be provided only at the rear surface (FIG. 6(b)) of the pressure sensing device 300, as shown in FIG. 9, rather than the front surface (FIG. 6(a)), at which a board is provided. The reason for this is that it is necessary to prevent loss in the electrical signal transmitted from the measurement portion 310.

The coupling portion may be provided over the portion of the rear surface (FIG. 6(b)) of the pressure sensing device 300 that is in contact with the case 100.

In addition, a prevention portion configured to prevent loss in an electrical signal transmitted in the order of the measurement portion 310, the transmission portion 311, and the connection portion 320 may be provided in order to hermetically seal the front surface (FIG. 6(a)) of the pressure sensing device 300 together with the case 100. In this case, the prevention portion may be made of a material capable of being easily welded or attached to the case 100.

FIG. 9 is a photograph showing a pressure measurement apparatus according to the present invention, and FIG. 10 is a schematic view of the pressure measurement apparatus according to the present invention.

The pressure measurement apparatus according to the present invention may include the pouch-shaped secondary battery, a jig 400 configured to press the upper part and the lower part of the pouch-shaped secondary battery, and a pressure transmission device 500 connected to the pressure sensing device 300 disposed in the pouch-shaped secondary battery so as to protrude outwards therefrom in order to transmit pressure information to an external device.

The jig 400 applies pressing force F in the same direction as the stacking direction of the electrode assembly 200 of the pouch-shaped secondary battery to such an extent that the electrode assembly 200 is not damaged in order to move gas to the surplus portion or the gas pocket 130 of the case 100 without swelling of the case 100.

The jig 400, which is a separate device, as shown in FIG. 9, may be one piece of equipment configured to measure pressure in the pouch-shaped secondary battery. However, it is obvious that the jig may be replaced by the portion to which the pouch-shaped secondary battery is mounted when the pouch-shaped secondary battery is operated in a state of being connected to the external device. The portion to which the pouch-shaped secondary battery is mounted may be a space formed so as to have a size similar to the size of the pouch-shaped secondary battery and to exhibit strength to some extent. In the case in which the pouch-shaped secondary battery constitutes a battery module or a battery pack, a receiving portion of the battery module or the battery pack configured to receive the pouch-shaped secondary battery may be provided so as to have the same size as the pouch-shaped secondary battery.

The pressure transmission device 500 may transmit pressure information to the external device through a communication scheme. Although the pressure transmission device 500 may be provided as a member other than the pressure sensing device 300, as shown in FIGS. 9 and 10, the pressure transmission device may be integrally formed with the pressure sensing device 300, whereby pressure may be measured and may then be immediately transmitted to the outside.

In a pressure measurement method according to the present invention, (S1) pressure is measured in the state in which the upper part and the lower part of the pouch-shaped secondary battery are pressed by the jig 400. At this time, (S2) pressure measurement is performed by the pressure sensing device 300 mounted at the pressed pouch-shaped secondary battery. As described above, the pressure sensing device 300 according to the present invention directly measures pressure in the pouch-shaped secondary battery. At this time, the pressure sensing device 300 transmits information about pressure generated in the pouch-shaped secondary battery to the pressure transmission device 500, and the pressure transmission device 500 transmits the pressure information to an external device. Alternatively, the pressure sensing device 300 may transmit the pressure information to the external device.

The invention is defined by the appended claims.

### (Description of Reference Symbols)

10, 100: Cases
11, 110: Receiving portions
20, 200: Electrode assemblies
30, 300, 300(a), 300(b): Pressure sensing devices
120: Terraced portion
130: Gas pocket
210: Stack
220: Electrode tabs
230: Electrode lead
310: Measurement portion
311: Transmission portion
320: Connection terminal
330: Through-opening
400: Jig
500: Pressure transmission device
F: Pressing force

### [Industrial Applicability]

As is apparent from the above description, a pouch-shaped secondary battery according to the present invention is configured such that it is possible to directly measure pressure in the pouch-shaped secondary battery in order to check the amount of gas in the pouch-shaped secondary battery and to determine whether the battery is abnormal.

In addition, it is possible to accurately check the lifespan of the pouch-shaped secondary battery, whereby it is possible to improve safety of a user who uses the pouch-shaped secondary battery, and it is possible for the user to check the lifespan of the pouch-shaped secondary battery in real time and to determine whether the battery is abnormal.

## Claims

1. A pouch-shaped secondary battery comprising:
a case (100) having a receiving portion (110) configured to receive an electrode assembly (200), wherein the electrode assembly (200) is provided in the receiving portion (110); and
a pressure sensing device (300) configured to measure pressure in the pouch-shaped secondary battery, wherein
the pressure sensing device (300) extends through the case (100) from an inside to an outside of the case (100),
the case (100) additionally has a gas pocket (130) configured to receive gas generated in the receiving portion (110), and
the pressure sensing device (300) is provided at the gas pocket (130).

2. The pouch-shaped secondary battery according to claim 1, wherein the pressure sensing device (300) comprises:
a measurement portion (310) located in the case (100), the measurement portion (310) being configured to measure pressure;
a connection terminal (320) located outside the case (100), the connection terminal (320) being configured to connect the measurement portion (310) to an external instrument; and
a through-opening (330) located between the measurement portion (310) and the connection terminal (320), the through-opening (330) being hermetically sealed together with the case (100) when the case (100) is hermetically sealed.

3. The pouch-shaped secondary battery according to claim 2, wherein at least a portion of the through-opening (330) comprises a coupling portion with an insulation film being removed.

4. The pouch-shaped secondary battery according to claim 3, wherein an outer surface of the coupling portion (330) is made of copper.

5. The pouch-shaped secondary battery according to claim 3, wherein the coupling portion (330) is provided at a portion of the pressure sensing device (300) at which no board is located.

6. The pouch-shaped secondary battery according to claim 2, wherein the measurement portion (310) has a fluid, such as gel, therein to sense pressure.

7. A pressure measurement apparatus comprising:
a jig (400) configured to press an upper part and a lower part of the pouch-shaped secondary battery according to any one of claims 1 to 6; and
a pressure transmission device (500) connected to the pressure sensing device (300) disposed in the pouch-shaped secondary battery so as to protrude outwards therefrom, the pressure transmission device (500) being configured to transmit pressure information to an external device.

8. The pressure measurement apparatus according to claim 7, wherein the pressure transmission device (500) transmits the pressure information to the external device through a communication scheme.

9. A pressure measurement method comprising:
(S1) pressing the upper part and the lower part of the pouch-shaped secondary battery according to any one of claims 1 to 6 using a jig (400);
(S2) transmitting information sensed by the pressure sensing device (300) mounted at the pressed pouch-shaped secondary battery to a pressure transmission device (500); and
(S3) transmitting, by the pressure transmission device (500), pressure information to an external device.

## Patentansprüche

1. Beutelförmige Sekundärbatterie, umfassend:
ein Gehäuse (100), welches einen Aufnahmeabschnitt (110) aufweist, welcher dazu eingerichtet ist, eine Elektrodenanordnung (200) aufzunehmen, wobei die Elektrodenanordnung (200) in dem Aufnahmeabschnitt (110) bereitgestellt ist; und
eine Druckerfassungsvorrichtung (300), welche dazu eingerichtet ist, einen Druck in der beutelförmigen Sekundärbatterie zu messen, wobei
sich die Druckerfassungsvorrichtung (300) von einem Inneren zu einem Äußeren des Gehäuses (100) durch das Gehäuse (100) erstreckt,
das Gehäuse (100) zusätzlich eine Gastasche (130) aufweist, welche dazu eingerichtet ist, in dem Aufnahmeabschnitt (110) erzeugtes Gas aufzunehmen, und
die Druckerfassungsvorrichtung (300) an der Gastasche (130) bereitgestellt ist.

2. Beutelförmige Sekundärbatterie nach Anspruch 1, wobei die Druckerfassungsvorrichtung (300) umfasst:
einen Messabschnitt (310), welcher sich in dem Gehäuse (100) befindet, wobei der Messabschnitt (310) dazu eingerichtet ist, einen Druck zu messen;
einen Verbindungsanschluss (320), welcher sich außerhalb des Gehäuses (100) befindet, wobei der Verbindungsanschluss (320) dazu eingerichtet ist, den Messabschnitt (310) mit einem externen Instrument zu verbinden; und
eine Durchgangsöffnung (330), welche sich zwischen dem Messabschnitt (310) und dem Verbindungsanschluss (320) befindet, wobei die Durchgangsöffnung (330) zusammen mit dem Gehäuse (100) hermetisch abgedichtet ist, wenn das Gehäuse (100) hermetisch abgedichtet ist.

3. Beutelförmige Sekundärbatterie nach Anspruch 2, wobei wenigstens ein Abschnitt der Durchgangsöffnung (330) einen Kopplungsabschnitt umfasst, von welchem eine Isolationsfolie entfernt ist.

4. Beutelförmige Sekundärbatterie nach Anspruch 3, wobei eine äußere Fläche des Kopplungsabschnitts (330) aus Kupfer hergestellt ist.

5. Beutelförmige Sekundärbatterie nach Anspruch 3, wobei der Kopplungsabschnitt (330) an einem Abschnitt der Druckerfassungsvorrichtung (300) bereitgestellt ist, an welchem sich keine Platine befindet.

6. Beutelförmige Sekundärbatterie nach Anspruch 2, wobei der Messabschnitt (310) ein Fluid, wie etwa ein Gel, darin aufweist, um einen Druck zu erfassen.

7. Druckmessvorrichtung, umfassend:
eine Spannvorrichtung (400), welche dazu eingerichtet ist, einen oberen Teil und einen unteren Teil der beutelförmigen Sekundärbatterie nach einem der Ansprüche 1 bis 6 zusammenzudrücken; und
eine Druckübertragungsvorrichtung (500), welche derart mit der in der beutelförmigen Sekundärbatterie angeordneten Druckerfassungsvorrichtung (300) verbunden ist, dass sie davon nach außen vorsteht, wobei die Druckübertragungsvorrichtung (500) dazu eingerichtet ist, Druckinformationen an eine externe Vorrichtung zu übertragen.

8. Druckmessvorrichtung nach Anspruch 7, wobei die
Druckübertragungsvorrichtung (500) die Druckinformationen über ein Kommunikationsschema an die externe Vorrichtung überträgt.

9. Druckmessverfahren, umfassend:
(S1) Zusammendrücken des oberen Teils und des unteren Teils der beutelförmigen Sekundärbatterie nach einem der Ansprüche 1 bis 6 unter Verwendung einer Spannvorrichtung (400);
(S2) Übertragen von durch die an der zusammengedrückten beutelförmigen Sekundärbatterie montierten Druckerfassungsvorrichtung (300) erfassten Informationen an eine Druckübertragungsvorrichtung (500); und
(S3) Übertragen, durch die Druckübertragungsvorrichtung (500), von Druckinformationen an eine externe Vorrichtung.

## Revendications

1. Batterie secondaire en forme de poche comprenant :
un boîtier (100) présentant une partie réceptrice (110) configurée pour recevoir un ensemble d'électrodes (200), dans laquelle l'ensemble d'électrodes (200) est disposé dans la partie réceptrice (110) ; et
un dispositif de détection de pression (300) configuré pour mesurer la pression dans la batterie secondaire en forme de poche, dans laquelle
le dispositif de détection de pression (300) s'étend à travers le boîtier (100) d'un intérieur vers un extérieur du boîtier (100),
le boîtier (100) présente en outre une poche de gaz (130) configurée pour recevoir du gaz généré dans la partie réceptrice (110), et
le dispositif de détection de pression (300) est disposé au niveau de la poche de gaz (130).

2. Batterie secondaire en forme de poche selon la revendication 1, dans laquelle le dispositif de détection de pression (300) comprend :
une partie de mesure (310) située dans le boîtier (100), la partie de mesure (310) étant configurée pour mesurer la pression ;
une borne de connexion (320) située à l'extérieur du boîtier (100), la borne de connexion (320) étant configurée pour connecter la partie de mesure (310) à un instrument externe ; et
une ouverture traversante (330) située entre la partie de mesure (310) et la borne de connexion (320), l'ouverture traversante (330) étant hermétiquement scellée avec le boîtier (100) lorsque le boîtier (100) est hermétiquement scellé.

3. Batterie secondaire en forme de poche selon la revendication 2, dans laquelle au moins une partie de l'ouverture traversante (330) comprend une partie de couplage avec un film isolant qui est retiré.

4. Batterie secondaire en forme de poche selon la revendication 3, dans laquelle une surface externe de la partie de couplage (330) est en cuivre.

5. Batterie secondaire en forme de poche selon la revendication 3, dans laquelle la partie de couplage (330) est disposée au niveau d'une partie du dispositif de détection de pression (300) au niveau de laquelle aucune carte n'est située.

6. Batterie secondaire en forme de poche selon la revendication 2, dans laquelle la partie de mesure (310) comprend un fluide, tel qu'un gel, pour détecter la pression.

7. Appareil de mesure de pression comprenant :
un gabarit (400) configuré pour presser une partie supérieure et une partie inférieure de la batterie secondaire en forme de poche selon l'une quelconque des revendications 1 à 6 ; et
un dispositif de transmission de pression (500) connecté au dispositif de détection de pression (300) disposé dans la batterie secondaire en forme de poche de manière à faire saillie vers l'extérieur de celle-ci, le dispositif de transmission de pression (500) étant configuré pour transmettre des informations de pression à un dispositif externe.

8. Appareil de mesure de pression selon la revendication 7, dans lequel le dispositif de transmission de pression (500) transmet les informations de pression au dispositif externe par l'intermédiaire d'un schéma de communication.

9. Procédé de mesure de pression, comprenant :
(S1) presser la partie supérieure et la partie inférieure de la batterie secondaire en forme de poche selon l'une quelconque des revendications 1 à 6 à l'aide d'un gabarit (400) ;
(S2) transmettre les informations détectées par le dispositif de détection de pression (300) monté au niveau de la batterie secondaire en forme de poche pressée à un dispositif de transmission de pression (500) ;
et
(S3) transmettre, par le dispositif de transmission de pression (500), les informations de pression à un dispositif externe.
